(19) Europäisches Patentamt / European Patent Office / Office européen des brevets

(11) **EP 2 158 522 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(51) Int Cl.:
**G03H 1/08** (2006.01)  **G03H 1/22** (2006.01)

(21) Anmeldenummer: **08750322.3**

(22) Anmeldetag: **16.05.2008**

(86) Internationale Anmeldenummer:
**PCT/EP2008/056024**

(87) Internationale Veröffentlichungsnummer:
**WO 2008/138981 (20.11.2008 Gazette 2008/47)**

(54) **ANALYTISCHES VERFAHREN ZUR BERECHNUNG VON VIDEOHOLOGRAMMEN IN ECHTZEIT**

ANALYTICAL METHOD FOR COMPUTING VIDEO HOLOGRAMS IN REAL TIME

PROCÉDÉ ANALYTIQUE PERMETTANT LE CALCUL DE HOLOGRAMMES VIDÉO EN TEMPS RÉEL

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007 DE 102007023785**

(43) Veröffentlichungstag der Anmeldung:
**03.03.2010 Patentblatt 2010/09**

(73) Patentinhaber: **SeeReal Technologies S.A.**
**5366 Munsbach (LU)**

(72) Erfinder: **SCHWERDTNER, Alexander**
**01307 Dresden (DE)**

(74) Vertreter: **Helbig, Nicole et al**
**SeeReal Technologies GmbH**
**Sudhausweg 5**
**01099 Dresden (DE)**

(56) Entgegenhaltungen:
**WO-A-2006/041191    WO-A-2006/119760**
**US-A- 5 400 155    US-A1- 2006 139 711**

- **LUCENTE M: "INTERACTIVE COMPUTATION OF HOLOGRAMS USING A LOOK-UP TABLE" JOURNAL OF ELECTRONIC IMAGING, SPIE / IS & T, Bd. 2, Nr. 1, 1. Januar 1993 (1993-01-01), Seiten 28-34, XP000355268 ISSN: 1017-9909**

## Beschreibung

Die Erfindung betrifft ein analytisches Verfahren zur Berechnung von Videohologrammen für eine holographische Wiedergabeeinrichtung in Echtzeit sowie eine holographische Wiedergabeeinrichtung.

Einer derartigen holographischen Wiedergabeeinrichtung liegt im Wesentlichen das Prinzip zugrunde, dass mit mindestens einem Lichtmodulatormittel, in welches eine in Objektpunkte zerlegte Szene als Gesamthologramm kodiert wird und als Rekonstruktion von einem Sichtbarkeitsbereich aus zu sehen ist, der innerhalb eines Periodizitätsintervalls der Rekonstruierten des Videohologramms liegt, zusammen mit jedem zu rekonstruierenden Objektpunkt der Szene ein Subhologramm definiert und das Gesamthologramm aus einer Überlagerung von Subhologrammen gebildet wird. Dabei wird im Wesentlichen das Prinzip verfolgt, vorrangig jene Wellenfront, die ein Objekt aussenden würde, in ein oder mehrere Sichtbarkeitsregionen zu rekonstruieren. Im Detail liegt einer derartigen Einrichtung das Prinzip zugrunde, dass die Rekonstruktion eines einzelnen Objektpunkts jeweils nur ein Subhologramm als Teilmenge des am Lichtmodulatormittel kodierten Gesamthologramms erfordert. Die holographische Wiedergabeeinrichtung enthält wenigstens ein Bildschirmmittel. Dabei wird als Bildschirmmittel entweder der Lichtmodulator selbst bezeichnet, in dem das Hologramm einer Szene kodiert ist, oder ein optisches Element - beispielsweise Linse oder Spiegel -, auf das ein im Lichtmodulator kodiertes Hologramm oder eine im Lichtmodulator kodierte Wellenfront einer Szene abgebildet wird.

Die Festlegung des Bildschirmmittels und die zugehörigen Prinzipien zur Rekonstruktion der Szene in den Sichtbarkeitsbereich sind durch Dokumente des Anmelders beschrieben. In den Dokumenten WO 2004/044659 A2 sowie WO 2006/027228 A1 ist das Bildschirmmittel der Lichtmodulator selbst. Im Dokument WO 2006/119760 A2, Projektionsvorrichtung und Verfahren zur holographischen Rekonstruktion von Szenen ist das Bildschirmmittel ein optisches Element, auf das ein im Lichtmodulator kodiertes Hologramm abgebildet wird. In DE 10 2006 004 300, Projektionsvorrichtung zur holographischen Rekonstruktion von Szenen, ist das Bildschirmmittel ein optisches Element, auf das eine im Lichtmodulator kodierte Wellenfront der Szene abgebildet wird. WO 2006/066919 A1 des Anmelders beschreibt ein Verfahren zum Berechnen von Videohologrammen.

Ein "Sichtbarkeitsbereich" ist ein begrenzter Bereich, durch welchen der Betrachter die gesamte rekonstruierte Szene mit ausreichend großer Sichtbarkeit ansehen kann. Innerhalb des Sichtbarkeitsbereichs überlagern sich die Wellenfelder so, dass die rekonstruierte Szene für den Betrachter sichtbar wird. Der Sichtbarkeitsbereich befindet sich auf den oder nahe den Augen des Betrachters. Der Sichtbarkeitsbereich kann in die Richtungen X, Y und Z bewegt werden und wird mit bekannten Positionserkennungs- beziehungsweise Nachführeinrichtungen der aktuellen Betrachterposition nachgeführt. Es ist möglich, zwei Sichtbarkeitsbereiche zu verwenden, nämlich einen für jedes Auge. Aufwändigere Anordnungen von Sichtbarkeitsbereichen sind ebenfalls möglich. Es ist ferner möglich, Videohologramme so zu kodieren, dass für den Betrachter einzelne Objekte oder die ganze Szene scheinbar hinter dem Lichtmodulator liegen.

In diesem Dokument wird als Lichtmodulatormittel beziehungsweise SLM eine Einrichtung zum Steuern der Intensität, Farbe und/oder Phase durch Schalten, Austasten oder Modulieren von Lichtstrahlen einer oder mehrerer unabhängiger Lichtquellen bezeichnet. Eine holographische Wiedergabeeinrichtung beinhaltet in der Regel eine Matrix steuerbarer Pixel, wobei die Pixel die Amplitude und/oder Phase von durchstrahlendem Licht verändern und so die Objektpunkte rekonstruieren. Ein Lichtmodulatormittel umfasst eine derartige Matrix. Das Lichtmodulatormittel kann beispielsweise diskret als akusto-optischer Modulator AOM oder auch kontinuierlich ausgeführt sein. Eine Ausführung zur Rekonstruktion der Hologramme durch Amplitudenmodulation kann mit einem Liquid Crystal Display (LCD) erfolgen. Die vorliegende Erfindung bezieht sich ebenso auf weitere steuerbare Vorrichtungen, um hinreichend kohärentes Licht zu einer Lichtwellenfront oder zu einem Lichtwellenrelief zu modulieren.

Die Bezeichnung Pixel umfasst ein steuerbares Hologramm-Pixel des Lichtmodulators, repräsentiert einen diskreten Wert des Hologrammpunktes und ist einzeln adressiert und gesteuert. Jedes Pixel repräsentiert einen Hologrammpunkt des Hologramms. Im Falle eines LC-Displays bedeutet ein Pixel ein individuell ansteuerbares Display- Pixel. Für eine DMD (Digital Micromirror Device, Mikrospiegelarray), z.B. DLP (Digital Light Processing), ist ein Pixel ein individuell steuerbarer Mikrospiegel oder eine kleine Gruppe davon. Bei einem kontinuierlichen Lichtmodulatormittel umfasst ein Pixel eine imaginäre Region, welche den Hologrammpunkt repräsentiert. Bei einer Farbdarstellung wird in der Regel ein Pixel in mehrere Subpixel unterteilt, welche die Grundfarben repräsentieren.

Der Begriff "Transformation" ist so weit auszulegen, dass er jede mathematische oder rechnerische Technik einschließt, die einer Transformation gleichkommt oder diese annähert. Transformationen im mathematischen Sinne sind lediglich Annäherungen physikalischer Prozesse, die genauer durch die Maxwellschen Wellenausbreitungsgleichungen beschrieben werden. Transformationen wie etwa Fresneltransformationen oder die spezielle Gruppe von Transformationen, die als Fouriertransformationen bekannt sind, beschreiben Annäherungen zweiter Ordnung. Transformationen führen in der Regel auf algebraische und nicht differentielle Beschreibungen und können folglich rechentechnisch effizient und performant gehandhabt werden. Überdies können sie präzise als optische Systeme modelliert werden.

Die US 5,400,155 beschreibt ein Verfahren zur Berechnung von Videohologrammen, in dem die darzustellende Szene zerlegt wird, um jeweils in eindimensionalen ausgedehnten "calculating regions" in einer Displayebene entsprechende eindimensionale (Teil)hologramme zu erstellen und diese dann aufzusummieren.

WO 2006/066919 A1 des Anmelders beschreibt ebenfalls ein Verfahren zum Berechnen von Videohologrammen. Es basiert im Wesentlichen darauf, eine Zerlegung der Szene in Ebenenschnitte parallel zur Ebene eines Lichtmodulators durchzuführen, alle Ebenenschnitte in einen Sichtbarkeitsbereich zu transformieren und dort aufzusummieren. Anschließend werden die summierten Ergebnisse in die Hologrammebene, in welcher auch der Lichtmodulator liegt, zurück transformiert und so die komplexen Hologrammwerte des Videohologramms ermittelt.

DE 10 2006 042 324 beschreibt ein Verfahren zum Generieren von Videohologrammen in Echtzeit. Es nutzt das Prinzip, dass die Rekonstruktion eines einzelnen Objektpunkts nur ein Subhologramm als Teilmenge des auf dem SLM kodierten Gesamthologramms erfordert. Es ist dadurch charakterisiert, dass für jeden Objektpunkt die Beiträge der Subhologramme aus Look-Up-Tabellen bestimmbar sind und die Subhologramme zu einem Gesamthologramm zur Rekonstruktion der gesamten Szene akkumuliert werden.

Auch in Lucente M.: "interactive computation of holograms using a look-up table", Journal of Electronic Imaging, Bd. 2, Nr. 1, 1993, S. 28-34 wird die Verwendung von Look-up-Tabellen vorgeschlagen, um die Generierung von Videohologrammen zu beschleunigen.

Die erstgenannten Verfahren für die Generierung von Videohologrammen ist für die interaktive Echtzeitdarstellung nur mit sehr hohem Aufwand an Ressourcen realisierbar. Aufgrund der Vielzahl der aufwändigen Berechnungsschritte ist die Generierung der Videohologramme überdies mit hohem Rechenaufwand verbunden und erfordert hoch performante und kostspielige Recheneinheiten. Als Folge der langen Berechnungszeit besteht die Gefahr, dass Videosequenzen und interaktive 3D-Echtzeitanwendungen nicht in der gewünschten Wiederholfrequenz dargeboten werden können.

Analog zur herkömmlichen Videotechnik ist jedoch eine hohe Rate der Bildwiederholung für die Anzeige der computergenerierten Videohologramme wünschenswert und unerlässlich. In gleicher Weise nachteilig sind die Verfahren dadurch charakterisiert, dass Hologrammwerte nur für Objektpunkte an bestimmten diskreten Orten beziehungsweise an Orten diskreter Schnittebenen generiert werden können.

Es ist die Aufgabe der Erfindung, den Nachteil im Stand der Technik zu beseitigen. Es soll ein Verfahren geschaffen werden, wodurch Hologrammwerte für Objektpunkte an jeder beliebigen Position innerhalb des Rekonstruktionsraums, des Frustrums, berechnet werden können. Die zugehörigen Hologrammwerte sollen in Echtzeit ermittelt werden. Überdies liegt der Erfindung die Aufgabe zugrunde, den erforderlichen Aufwand für die Ermittlung der Hologrammwerte signifikant zu reduzieren und somit die Echtzeitfähigkeit des Verfahrens zu untermauern.

Diese Aufgabe wird durch ein Verfahren mit den Merkmalen des Patentanspruchs 1 sowie durch eine holographische Wiedergabeeinrichtung mit den Merkmalen des Patentanspruchs 13 gelöst.

Das erfindungsgemäße Verfahren zum Generieren von Videohologrammen ist für holographische Wiedergabeeinrichtungen mit mindestens einem Lichtmodulatormittel, in welches eine in Objektpunkte zerlegte Szene als Gesamthologramm kodiert wird und als Rekonstruktion von einem Sichtbarkeitsbereich aus zu sehen ist, der innerhalb eines Periodizitätsintervalls der Rekonstruierten des Videohologramms liegt geeignet, wobei der Sichtbarkeitsbereich zusammen mit jedem zu rekonstruierenden Objektpunkt der Szene ein Subhologramm definiert und das Gesamthologramm aus einer Überlagerung von Subhologrammen gebildet wird. Einer derartigen holographischen Wiedergabeeinrichtung mit entsprechenden Lichtmodulatormitteln liegt dabei das Prinzip zugrunde, die mit Informationen von Objektpunkten einer Szene modulierten Wellenfronten in wenigstens einem Sichtbarkeitsbereich zu überlagern. Die Begriffsbestimmungen zum Sichtbarkeitsbereich wurden bereits erläutert.

Im Weiteren wird das Prinzip genutzt, dass die Rekonstruktion eines einzelnen Objektpunkts einer Szene jeweils nur ein Subhologramm als Teilmenge des auf den Lichtmodulatormitteln kodierten Gesamthologramms erfordert. Ein einzelner Objektpunkt wird jeweils durch ein Subhologramm erzeugt, dessen Lage von der Position des Objektpunkts und dessen Größe von der Position des Betrachters abhängt. Der Bereich des Subhologramms auf dem Lichtmodulatormittel wird nachfolgend als Modulatorbereich bezeichnet. Der Modulatorbereich ist jener Teilbereich des Lichtmodulatormittels, welcher erforderlich ist, um den Objektpunkt zu rekonstruieren. Der Modulatorbereich beschreibt gleichzeitig, welche Pixel auf dem Lichtmodulator entsprechend angesteuert werden müssen, um diesen Objektpunkt zu rekonstruieren. Die Position des Modulatorbereichs bleibt fest, wenn es sich um einen so genannten ortsfesten Objektpunkt handelt. Dabei ändert der zu rekonstruierende Objektpunkt seine Lage in Abhängigkeit von der Betrachterposition. Durch Änderung des Modulatorbereichs in Abhängigkeit der Betrachterposition wird erreicht, dass der Objektpunkt ortsfest kodiert wird, das heißt, er ändert seine räumliche Lage in Abhängigkeit der Betrachterposition nicht. In Bezug auf die Erfindung können diese Prinzipien analog behandelt werden.

Das Zentrum des Modulatorbereichs liegt in einer einfachsten Lösungsmöglichkeit auf der Geraden durch den zu rekonstruierenden Objektpunkt und das Zentrum des Sichtbarkeitsbereichs. Die Größe des Modulatorbereichs wird in einer einfachsten Lösungsmöglichkeit mit Hilfe des Strahlensatzes ermittelt, wobei der Sichtbarkeitsbereich durch den zu rekonstruierenden Objektpunkt auf das Lichtmodulatormittel rückverfolgt wird. Auch bei der vorteilhaften Verwendung von Subhologrammen gilt, dass ein Pixel, als kleinste steuerbare Einheit des Lichtmodulatormittels, nicht nur die Information eines einzelnen Subhologramms, sondern als Resultat der Überlagerungen die Informationen mehrerer Subhologramme enthält.

Der Erfindung liegt der Gedanke zugrunde, dass die komplexen Hologrammwerte eines Subhologramms aus der Wellenfront des jeweils zu rekonstruierenden Objektpunkts in einem Modulatorbereich des Lichtmodulatormittels ermittelt werden, indem die Transmissions- oder Modulationsfunktionen eines im Modulatorbereich modellierten Abbildungselements, in dessen Brennpunkt der zu rekonstruierende Objektpunkt liegt, berechnet und ausgewertet werden.

Das Abbildungselement befindet sich dabei in der Hologrammebene der holographischen Wiedergabeeinrichtung. Die Hologrammebene ist durch den Ort eines Bildschirmmittels festgelegt, wobei zur Vereinfachung in den nachfolgenden Erläuterungen das Bildschirmmittel der Lichtmodulator selbst ist.

In einer besonders bevorzugten Ausführungsform des Verfahrens umfasst das Abbildungselement eine in der Hologrammebene liegende Linse mit der Brennweite f, welche geneigt ist. Eine geneigte Linse ist eine Zusammensetzung aus einer in Bezug auf die Hologrammebene nicht geneigten Linse sowie einem vertikal und einem horizontal wirkenden Prisma. Streng genommen wird durch ein Prisma kein Subhologramm definiert, da durch die nichtfokale Prismenfunktion kein Objektpunkt rekonstruiert wird. Im Sinne der Klarheit des Erfindungsgedankens wird dies nachfolgend jedoch so bezeichnet, da das Prisma im Modulatorbereich ebenso einen Beitrag zu den komplexen Hologrammwerten liefert. Anhand einer Linse und eines Prismas wird das Verfahren nachfolgend weiter detailliert. Es ist selbstverständlich für eine Linse allein oder Prisma allein ebenso gültig, in diesem Falle werden Verfahrensschritte oder die entsprechenden Terme natürlich nicht durchgeführt oder nicht beachtet. Zur Berechnung der komplexen Werte des Subhologramms umfasst diese Detaillierung des Verfahrens für jeden Objektpunkt der Szene die nachfolgenden Schritte:

A: Ermittlung der Größe und Lage des Modulatorbereichs, analog den oben genannten Ausführungen, jedoch wird nachfolgend dem Modulatorbereich ein lokales Koordinatensystem zugrunde gelegt, wobei der Ursprung des Systems im Zentrum liegt, die x-Koordinate die Abszisse und die y-Koordinate die Ordinate beschreibt. Für den Modulatorbereich wird "a" als halbe Breite und "b" als halbe Höhe als Bemaßung gewählt, wobei diese Intervallgrenzen in die nachfolgenden Terme eingehen.

B: Ermittlung des Subhologramms der Linse in der Hologrammebene:

B1: Bestimmung der Brennweite f der Linse:
Die Brennweite f der Linse ist vorzugsweise der Normalabstand des zu rekonstruierenden Objektpunkts von der Hologrammebene.
B2: Komplexe Werte des zugehörigen Subhologramms der Linse:

Die komplexen Werte des zugehörigen Subhologramms werden aus

$$z_L = \exp\{ +/-i \cdot [\,(\pi/\lambda f)\cdot(x^2 + y^2)\,]\},$$

ermittelt, mit $\lambda$ als Bezugswellenlänge, f als Brennweite und dem zugehörigen Koordinatenpaar (x, y). Das negative Vorzeichen folgt hier aus der Eigenschaft einer konkaven Linse. Eine konvexe Linse ist durch ein positives Vorzeichen gekennzeichnet.

B3: Aufgrund der Symmetrie in x und y ist es ausreichend, die komplexen Werte in einem Quadranten zu ermitteln und unter Beachtung der Vorzeichen die weiteren Werte auf die anderen Quadranten zu übertragen.

C: Ermittlung der Subhologramme der Prismen (P) in der Hologrammebene: Die gewählten Prismen gehen dabei, siehe auch die nachfolgenden Figuren, durch die Abszisse beziehungsweise Ordinate.

C1: Bestimmung des Linearfaktors $C_x$ des Prismas (PH) mit horizontaler Wirkungsrichtung, welcher im Intervall $x \in [-a, a]$ beschrieben wird durch

$$C_x = M \cdot (2\pi/\lambda);$$

mit M als Neigung des Prismas.
C2: Bestimmung des Linearfaktors $C_y$ des Prismas (PV) mit vertikaler Wirkungsrichtung, welcher analog im Intervall $y \in [-b, b]$ beschrieben wird durch

$$C_y = N * (2\pi/\lambda);$$

mit $N$ als Neigung des Prismas.

C3: Ermittlung der komplexen Werte des zugehörigen Subhologramms der kombinierten Prismen:

Die komplexen Werte für das zugehörige Subhologramm werden aus der Überlagerung der beiden Prismenterme

$$z_P = \exp \{ i^* [ C_x{}^*(x-a) + C_y{}^*(y-b)]\}$$

ermittelt. Das überlagerte Prisma geht durch den Ursprung des lokalen Koordinatensystems.

C4: Ein entsprechender Prismenterm entfällt, wenn die holographische Wiedergabeeinrichtung die Eigenschaft aufweist, die Lichtquelle in den Sichtbarkeitsbereich abzubilden.

D: Modulation der Subhologramme für Linse und Prismen:
Zur Ermittlung des kombinierten Subhologramms werden die komplexen Werte der Linse und der Prismen komplex multipliziert:

$$z_{SH} = z_L{}^* z_P$$

beziehungsweise symbolisch

$$SH = SH_L * SH_P$$

E: Anwendung der Zufallsphase:

Jedem modulierten Subhologramm aus Schritt D wird eine zufallsverteilte Phase zugeordnet, um eine homogene Helligkeitsverteilung im Sichtbarkeitsbereich zu gewährleisten. Die Zufallsphase wird zum Subhologramm aufaddiert, indem eine komplexe Multiplikation ausgeführt wird:

$$z_{SH} := z_{SH} \exp (i\Phi_0)$$

beziehungsweise symbolisch

$$SH := SH \exp (i\Phi_0)$$

Die Zufallsphase wird jedem Subhologramm einzeln zugeordnet. Vorzugsweise sind insgesamt global betrachtet die Zufallsphasen aller Subhologramme gleich verteilt.

F: Intensitätsmodulation:

Die komplexen Werte werden mit einem zusätzlichen Multiplikationsfaktor, welcher die Intensität beziehungsweise die Helligkeit repräsentiert, versehen.

$$z_{SH} = C * z_{SH}$$

beziehungsweise symbolisch

$$SH := C * SH;$$

G: Wird das Gesamthologramm berechnet, so werden die Subhologramme zum Gesamthologramm überlagert. In einer einfachen Lösung werden die Subhologramme zum Gesamthologramm - unter Beachtung der Lage der Subhologramme - komplex aufaddiert.
Gesamthologramm = komplexe Summe der Subhologramme mit

$$H\Sigma_{SLM} = \Sigma\, SH_i$$

beziehungsweise symbolisch

$$z_{SLM} = \Sigma z_{SHi}$$

(mit Bezug auf ein globales Koordinatensystem)

Das Verfahren wird vorzugsweise nur für sichtbare Objektpunkte angewendet. Die Sichtbarkeit des Objektpunkts wird im Zuge des Renderns der Szene von einer 3D-Rendering-Graphikpipeline bestimmt und folgt aus der Betrachterposition, also der entsprechenden Position der Pupillen und folglich aus der Position des Sichtbarkeitsbereichs, welcher der Position der Pupillen nachgeführt ist.

Die detaillierte Beschreibung bezieht sich darauf, die bestmögliche Lösung zu berechnen. Es ist selbstverständlich möglich, die genannten Funktionsterme durch einfachere zu ersetzen, wenn eine Verschlechterung der Rekonstruktion akzeptiert oder gar gewünscht wird. Auf der anderen Seite ist es ersichtlich, dass aufdatierte Verfahrensschritte angewendet werden, um die Qualität der Rekonstruktion zu erhöhen. Beispielsweise können Linsen beziehungsweise Prismen speziell gewählt werden, um Aberrationen, toleranzbehaftete Lichtmodulatormittel oder dergleichen zu kompensieren. Dies gilt ebenso für die beispielhaft genannten Methoden, den Modulatorbereich zu bestimmen.

In einer Erweiterung des Verfahrens werden ausgehend von den komplexen Hologrammwerten des Gesamthologramms (oder des Subhologramms) die Pixelwerte für eine bestimmte holografische Wiedergabeeinrichtung ermittelt. Beispielsweise werden die komplexen Hologrammwerte in Burckhardt-Komponenten, Zweiphasenkomponenten oder eine andere geeignete Kodierung umgewandelt.

Diesem Verfahren liegt der Vorteil zugrunde, dass die Lage des zu rekonstruierenden Objektpunkts innerhalb des Rekonstruktionsbereichs (Frustrum) beliebig ist und nicht durch eine Diskretisierung, wie beispielsweise Schnittebenen, angenähert ist.

Neben einer Generierung der Hologrammwerte für die Darstellung auf einer holographischen Wiedergabeeinrichtung werden mit dem erfindungsgemäßen Verfahren bevorzugt Look-Up-Tabellen mit den generierten Subhologrammen befüllt. Dabei wird ein festgelegter Raumbereich in Objektpunkte strukturiert und für jeden Objektpunkt das Subhologramm in eine Look-Up-Tabelle abgelegt. Der genannte Raumbereich ist beispielsweise der zulässige oder definierte Raum, in dem sich die Pupillen des Betrachters befinden können, oder der Rekonstruktionsraum (Frustrum), welcher sich zwischen dem Lichtmodulatormittel und dem Sichtbarkeitsbereich aufspannt. Eine derartige generierte Look-Up-Tabelle erlaubt es somit, das vorab berechnete Subhologramm eines Objektpunkts auszulesen und im Zuge der Generierung der Hologrammdaten zu verwenden.Vorzugsweise werden die Look-Up-Tabellen mit den Subhologrammen des Abbildungselements, also der kombinierten Linsen- und Prismenfunktion befüllt. Es ist jedoch denkbar, entsprechende Tabellen separat mit den auf die Linsenbeziehungsweise Prismenfunktion bezogenen Subhologrammen zu befüllen. Generell erlauben diese Look-Up-Tabellen eine nachhaltige Beschleunigung von Verfahren, wo analog dem erfindungsgemäßen Verfahren ebenso das Prinzip von Subhologrammen in vorteilhafter Weise genutzt wird. Derartige Look-Up-Tabellen erlauben beispielsweise weiterführende beziehungsweise rechenintensive Verfahren zu beschleunigen.

Mit Hilfe dieses Verfahrens können in Echtzeit für die interaktive holographische Darstellung Objektpunkte an beliebigen Positionen innerhalb des Rekonstruktionsraums mit heute verfügbaren Standardkomponenten der Hardware generiert werden. Bei höherer Leistung der Verarbeitungseinheit, welche das Verfahren durchführt, kann die Szene feiner strukturiert und die Qualität der Rekonstruktion signifikant erhöht werden. Das erfindungsgemäße Verfahren vermeidet ansonsten verwendete aufwändige Transformationen und ist durch einen einfachen Aufbau analytisch durchführbarer Schritte gekennzeichnet. Damit ist die Echtzeitfähigkeit des erfindungsgemäßen Verfahrens nachhaltig untermauert.

Anhand von Ausführungsbeispielen wird die Erfindung nachstehend weiterführend erläutert. In den zugehörigen Figuren zeigen

Fig. 1       das zugrunde liegende Prinzip einer holographischen Wiedergabeeinrichtung und einen Modulatorbereich eines Objektpunkts,

Fig. 2a      die Wiedergabeeinrichtung in einer Seitenansicht mit einem Abbildungselement aus Linse und Prisma,

Fig. 2b      einen Modulatorbereich und ein vertikal wirkendes Prisma,

Fig. 2c      einen Modulatorbereich und ein horizontal wirkendes Prisma,

Fig. 3       einen Ablaufplan des erfindungsgemäßen Verfahrens und

Fig. 4       eine Variante des Verfahrens zur Rekonstruktion eines Objektpunkts hinter der Hologrammebene.

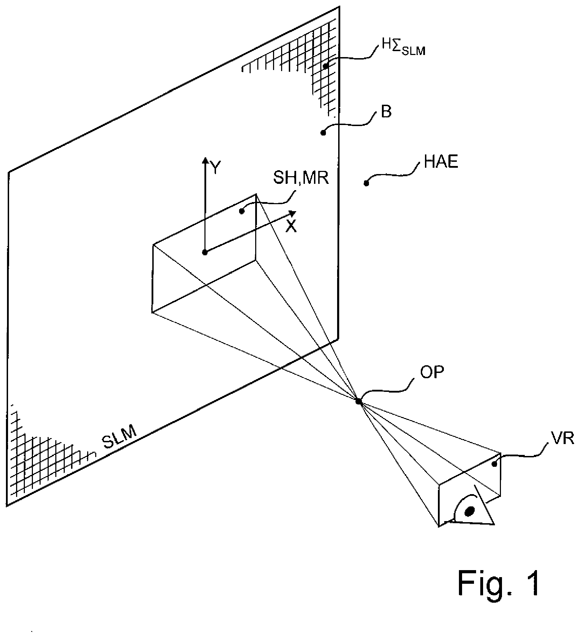

Fig. 1 veranschaulicht das zugrunde liegende Prinzip einer holographischen Wiedergabeeinrichtung (HAE) für einen Betrachter. Das Prinzip ist für mehrere Betrachter analog. Die Position eines Betrachters ist dabei durch die Position seiner Augen, respektive seiner Pupillen (VP) charakterisiert. Die Einrichtung enthält ein Lichtmodulatormittel (SLM), welches zur einfacheren Darstellung in dieser Ausführungsform gleich dem Bildschirmmittel (B) ist, und überlagert die mit Informationen von Objektpunkten einer Szene (3D-S) modulierten Wellenfronten in wenigstens einem Sichtbarkeitsbereich (VR). Der Sichtbarkeitsbereich ist den Augen nachgeführt. Die Rekonstruktion eines einzelnen Objektpunkts (OP) einer Szene (3D-S) erfordert dabei jeweils nur ein Subhologramm (SH) als Teilmenge des auf Lichtmodulatormitteln (SLM) kodierten Gesamthologramms (H$\Sigma_{SLM}$). Der Bereich des Subhologramms auf dem Lichtmodulator (SLM) ist der Modulatorbereich (MR).

Wie aus dieser Figur ersichtlich, ist der Modulatorbereich (MR) nur ein kleiner Teilbereich des Lichtmodulatormittels (SLM). Das Zentrum des Modulatorbereichs (MR) liegt in einer einfachsten Lösungsmöglichkeit auf der Geraden durch den zu rekonstruierenden Objektpunkt (OP) und das Zentrum des Sichtbarkeitsbereichs (VR). Die Größe des Modulatorbereichs (MR) wird in einer einfachsten Lösungsmöglichkeit mit Hilfe des Strahlensatzes ermittelt, wobei der Sichtbarkeitsbereich (VR) durch den zu rekonstruierenden Objektpunkt (OP) auf das Lichtmodulatormittel (SLM) zurückverfolgt wird. Im Weiteren ergeben sich dadurch die Indices jener Pixel auf dem Lichtmodulatormittel (SLM), die zur Rekonstruktion dieses Objektpunkts erforderlich sind. Wie aus der Figur ersichtlich, wird dem Modulatorbereich (MR) ein Koordinatensystem zugrunde gelegt, wobei der Ursprung des Systems im Zentrum liegt, die x-Koordinate die Abszisse und die y-Koordinate die Ordinate beschreibt. Der Modulatorbereich (MR) ist mit "a" als halbe Breite und "b" als halbe Höhe bemaßt.

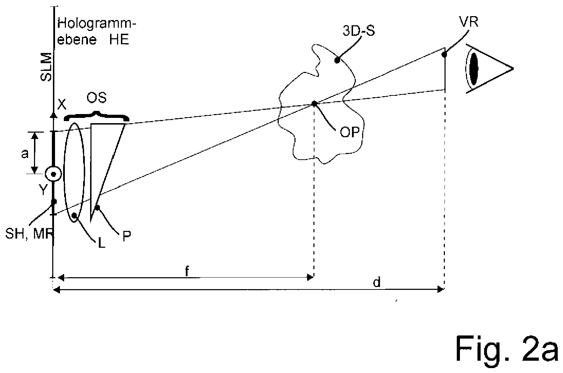

Fig. 2a zeigt die holographische Wiedergabeeinrichtung (HAE) in einer Seitenansicht und veranschaulicht das Grundprinzip des Verfahrens. Analog zu Fig. 1 wird der Modulatorbereich (MR) abgeleitet. Dieser Bereich ist in der Hologrammebene (HE), in welcher sich der Lichtmodulator (SLM) befindet. Im Modulatorbereich (MR) liegt das Abbildungselement (OS), welches hier eine Sammellinse (L) und ein Prisma (P) umfasst. Für das Prisma ist nur der vertikal wirkende Prismenkeil eingezeichnet, und das Abbildungselement (OS) ist in der Figur zur besseren Sichtbarkeit vor dem Lichtmodulatormittel (SLM) liegend eingezeichnet.

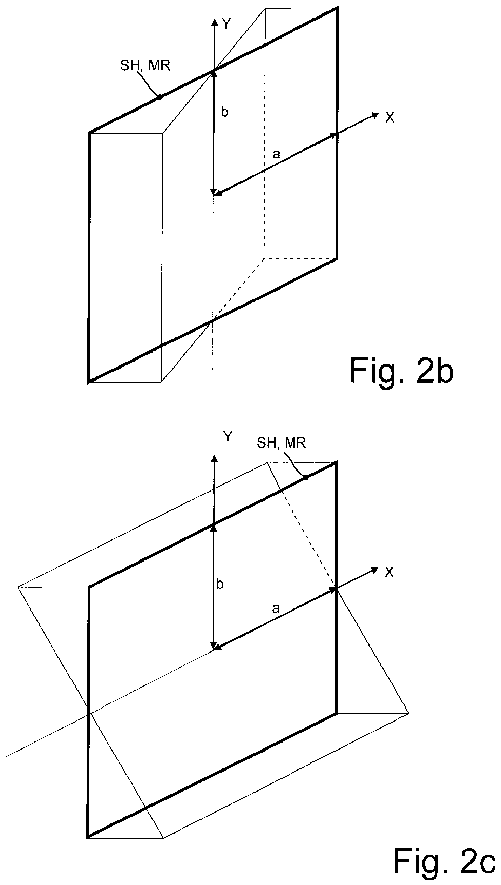

Fig. 2b zeigt einen horizontal wirkenden Prismenkeil (PH) vor dem Modulatorbereich (MR) mit den entsprechend verwendeten Koordinaten und Bemaßungen. Der Prismenkeil geht hier durch die Ordinate.

Fig. 2c zeigt analog einen vertikal wirkenden, durch die Abszisse gehenden Prismenkeil (PV). Die beiden Prismenkeile werden, wie nachfolgend erläutert, überlagert.

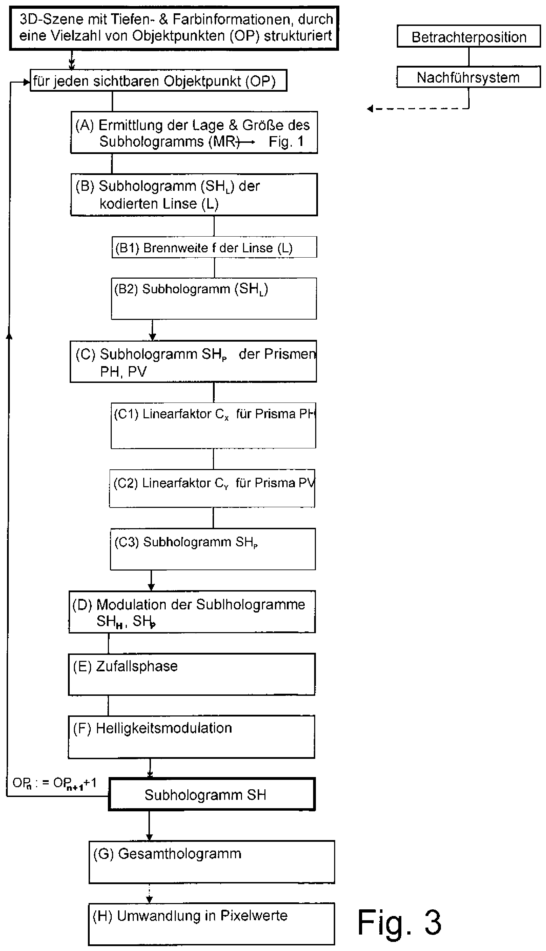

Fig. 3 zeigt einen Ablaufplan des erfindungsgemäßen Verfahrens. Ausgangspunkt des Verfahrens ist eine dreidimensionale Szene (3D-S), welche in eine Vielzahl von Objektpunkten (OP) strukturiert wird. Zu den Objektpunkten (OP) sind Farb- und Tiefeninformationen verfügbar. Anhand der Tiefeninformation des Objektpunkts wird dessen Sichtbarkeit gemäß der Betrachterposition, respektive der Pupillen des Betrachters, ermittelt. Für jeden sichtbaren Objektpunkt wird im Schritt (A) die Größe und Lage des zugehörigen Modulatorbereichs (MR) in der Hologrammebene (HE) beziehungsweise auf den Lichtmodulatormitteln bestimmt. Dem Gedanken der Erfindung folgend wird der zu rekonstruierende Objektpunkt (OP) als der Brennpunkt eines in der Hologrammebene liegenden Abbildungselements interpretiert und das Abbildungselement als Kombination einer Sammellinse (L) und, siehe Fig. 2b, 2c, von vertikal beziehungsweise horizontal wirkenden Prismen (PH, PV) aufgefasst. Die komplexen Hologrammwerte des Subhologramms (SH) werden aus der Wellenfront des jeweils zu rekonstruierenden Objektpunkts (OP) in einem Modulatorbereich (MR) des Lichtmodulatormittels ermittelt, indem die Transmissions- oder Modulationsfunktionen des im Modulatorbereich (MR) modellierten Abbildungselements (OS), in dessen Brennpunkt der zu rekonstruierende Objektpunkt (OP) liegt, berechnet und ausgewertet werden. Für jeden sichtbaren Objektpunkt wird somit im Schritt (B1) die Brennweite der Linse (L) als Normalabstand des Objektpunkts (OP) zur Hologrammebene (HE) ermittelt.

Die komplexen Werte für das zugehörige Subhologramm (SH$_L$) werden im Schritt (B2) aus

$$z_L = \exp\left\{ -i * \left[ (\pi/\lambda f) * (x^2 + y^2) \right] \right\}$$

ermittelt, mit $\lambda$ als Bezugswellenlänge, f als Brennweite, und dem zugehörigen lokalen Koordinatenpaar (x, y). Das Koordinatensystem ist wie eingangs beschrieben festgelegt.

Im Schritt (C) werden die Subhologramme ($SH_P$) der Prismen (P) in der Hologrammebene ermittelt. Die Bestimmung des Linearfaktors $C_x$ des Prismas (PH) mit horizontaler Wirkungsrichtung erfolgt durch

$$C_x = M * (2\pi/\lambda);$$

wobei M als Neigung des Prismas definiert ist. Dies erfolgt für das vertikale Prisma analog mit N als Neigung. Die komplexen Werte des zugehörigen Subhologramms ($SH_P$) werden aus der Überlagerung der beiden Prismenterme

$$SH_P := z_P = \exp \{ i* [ C_x*(x-a) + C_y*(y-b)]\}$$

ermittelt. Ein Prismenterm entfällt, wenn die holographische Wiedergabeeinrichtung die Eigenschaft aufweist, die Lichtquelle in den Sichtbarkeitsbereich (VR) abzubilden.

Nachdem die Subhologramme ($SH_L$) der Linse (L) und jene ($SH_P$) der Prismen (P) nun vorliegen, werden sie überlagert, indem im Schritt (D) für das kombinierte Subhologramm (SH) die komplexen Werte der Linse und der Prismen mit

$$z_{SH} = z_L * z_P$$

beziehungsweise symbolisch $SH = SH_L * SH_P$
komplex multipliziert werden.

Im Schritt (E) wird das Subhologramm (SH) mit einer gleich verteilten Zufallsphase versehen.

Im Schritt (F) erfolgt eine Intensitätsmodulation, wobei das Subhologramm (SH) durch

$$z_{SH} = C * z_{SH}$$

beziehungsweise symbolisch $SH := C * SH$
mit einem Intensitätsfaktor versehen wird.

Das kombinierte Subhologramm (SH) eines Objektpunkts (OP) liegt nun vollständig vor.

In einem weiteren Verfahrensschritt (G), welcher auch getrennt erfolgen kann, werden die Subhologramme der Objektpunkte zu einem Gesamthologramm ($H\Sigma_{SLM}$) aufaddiert. Die einzelnen Subhologramme ($SH_i$) der Objektpunkte sind superponierbar und werden zum Gesamthologramm ($H\Sigma_{SLM}$) komplex aufaddiert.

Gesamthologramm = komplexe Summe der Subhologramme der Objektpunkte mit

$$H\Sigma_{SLM} = \Sigma SH_i$$

beziehungsweise $z_{SLM} = \Sigma z_{SHi}$ (mit Bezug auf ein globales Koordinatensystem)

Das Gesamthologramm ($H\Sigma_{SLM}$) repräsentiert das Hologramm aller Objektpunkte. Es repräsentiert und rekonstruiert somit die gesamte Szene (3D-S).

In einem abschließenden Schritt (H) kann, wie bereits erläutert, durch eine Kodierung das Gesamthologramm in Pixelwerte für eine holographische Wiedergabeeinrichtung, welche ebenso das Prinzip der Subhologramme in vorteilhafter Weise nutzt, umgewandelt werden. Insbesondere sind dies, analog bereits erfolgten Erläuterungen, Einrichtungen nach WO 2004/044659 A2, WO 2006/027228 A1, WO 2006/119760 A2 sowie DE 10 2006 004 300.

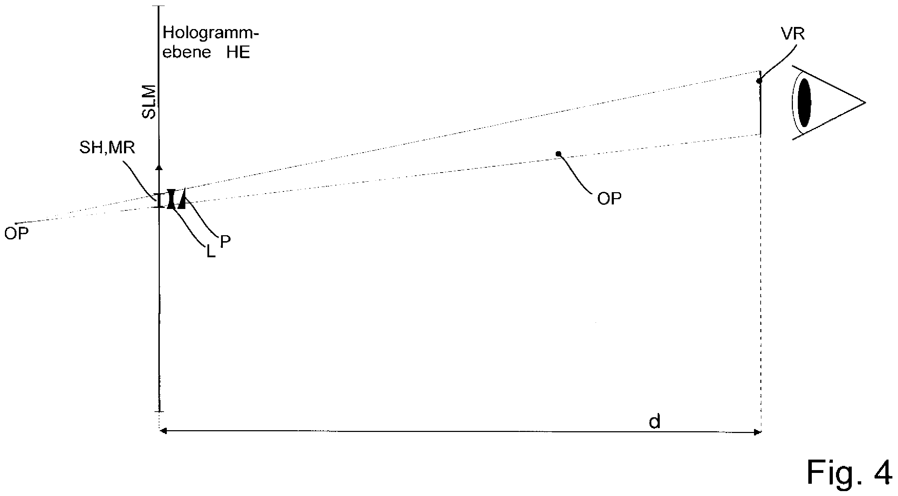

Fig. 4 veranschaulicht, dass durch das Verfahren Objektpunkte (OP), welche hinter der Hologrammebene (HE) liegen, prinzipiell analog rekonstruiert werden können. Das Abbildungselement (OS) umfasst in diesem Fall analog die genannten Prismen (P), jedoch ist in diesem Fall die Linse im Abbildungselement eine Streulinse (L), für welche die Wellenfront im Modulatorbereich analog ermittelt werden kann.

Liste der verwendeten Bezugszeichen

| | |
|---|---|
| 3D-S | Szene |
| VR | Sichtbarkeitsregionen |
| OP | Objektpunkt, allgemein |
| $OP_n$ | Objektpunkt, speziell mit Bezugsindex |
| SH | Subhologramm, allgemein |
| $SH_L$ | Subhologramm einer Linse |
| $SH_P$ | Subhologramm eines Prismas |
| MR | Modulatorbereich |
| $SH_i$ | Subhologramm, allgemein, indiziert |
| $H\Sigma_{SLM}$ | Gesamthologramm |
| HAE | holographische Wiedergabeeinrichtung mit |
| B | Bildschirmmittel |
| SLM | Lichtmodulatormittel |
| HE | Hologrammebene |
| VP | Betrachteraugen/Betrachterposition |
| OS | Abbildungselement |
| L | Linse |
| P | Prisma |
| PH | Prisma mit horizontaler Wirkungsrichtung |
| PV | Prisma mit vertikaler Wirkungsrichtung |

## Patentansprüche

1. Analytisches Verfahren zur Berechnung eines Videohologramms einer in eine Vielzahl von Objektpunkten zerlegte Szene (3D-S) zur Verwendung für eine holographische Wiedergabeeinrichtung (HAE) mit mindestens einem Lichtmodulatormittel (SLM),

   bei dem ein Sichtbarkeitsbereich (VR) innerhalb eines Periodizitätsintervalls der Rekonstruierten des Videohologramms definiert wird,

   bei dem anschließend durch den Sichtbarkeitsbereich (VR) zusammen mit jedem zu rekonstruierenden Objektpunkt (OP) der Szene (3D-S) die Lage und die Größe eines Subhologramms (SH) auf dem Lichtmodulatormittel bestimmt werden, indem der Sichtbarkeitsbereich (VR) durch den zu rekonstruierenden Objektpunkt auf das Lichtmodulatormittel (SLM) rückverfolgt wird, wobei ein Modulatorbereich (MR) dem Bereich des Subhologramms (SH) auf dem Lichtmodulatormittel (SLM) entspricht, wobei für jeden Modulatorbereich (MR) ein Subhologramm (SH) des zu rekonstruierenden Objektpunkts (OP) berechnet und das Gesamthologramm ($H\Sigma_{SLM}$) aus einer Überlagerung von Subhologrammen (SH) gebildet wird,

   **dadurch gekennzeichnet, dass** die komplexen Hologrammwerte eines Subhologramms (SH) aus der Wellenfront des jeweils zu rekonstruierenden Objektpunkts (OP) in einem Modulatorbereich (MR) des Lichtmodulatormittels ermittelt werden, indem die Modulationsfunktionen eines im Modulatorbereich (MR) modellierten Abbildungselements (OS), in dessen Brennpunkt der zu rekonstruierende Objektpunkt (OP) liegt, berechnet werden, mit denen das Subhologramm (SH) dieses Objektpunktes darstellbar ist.

2. Verfahren nach Anspruch 1, wobei das Abbildungselement (OS) wenigstens eine Linse (L) umfasst.

3. Verfahren nach Anspruch 1 oder 2, wobei das Abbildungselement (OS) zusätzlich wenigstens ein Prisma (P) umfasst.

4. Verfahren nach Anspruch 1, welches für jeden Objektpunkt (OP) der Szene die nachfolgenden Schritte umfasst:

   A: Ermittlung der Größe und Lage des Subhologramms (SH) als Modulatorbereich (MR), der mit "a" als halbe Breite und "b" als halbe Höhe bemaßt und mit lokalen Koordinaten versehen wird;
   B: Ermittlung des Subhologramms einer modellierten Linse (L) im Modulatorbereich (MR) umfassend:

   B1: Bestimmung der Brennweite f der Linse (L) als Normalabstand des zu rekonstruierenden Objektpunkts (OP) vom Modulatorbereich (MR) ;
   B2: Ermittlung der komplexen Werte des zugehörigen Subhologramms ($SH_L$) der Linse (L) aus

$$z_L = \exp\{ +/-i^*[ (\pi/\lambda f) * (x^2 + y^2)]\},$$

mit $\lambda$ als Bezugswellenlänge, f als Brennweite und dem zugehörigen Koordinatenpaar (x, y), sowie vorzeichenbehaftet für eine konkave/konvexe Linse;

C: Ermittlung der Subhologramme von modellierten Prismen (P) im Modulatorbereich (MR) umfassend:

C1: Bestimmung des Linearfaktors $C_x$ eines Prismas (PH) mit horizontaler Wirkungsrichtung, welcher im Intervall $x \in [-a, a]$ beschrieben wird durch

$$C_x = M * (2\pi/\lambda),$$

mit M als Neigung des Prismas;
C2: Bestimmung des Linearfaktors $C_y$ eines Prismas (PV) mit vertikaler Wirkungsrichtung, welcher analog im Intervall $y \in [-b, b]$ beschrieben wird durch

$$C_y = N * (2\pi/\lambda),$$

mit N als Neigung des Prismas;
C3: Ermittlung der komplexen Werte des zugehörigen Subhologramms ($SH_P$) der kombinierten Prismen aus der Überlagerung der beiden Prismenterme

$$z_P = \exp\{ i^* [ C_x^*(x-a) + C_y^*(y-b)]\};$$

D: Überlagerung des Subhologramms ($SH_L$) der Linse (L) und des Subhologramms ($SH_P$) der Prismen (P), wobei die komplexen Werte der Linse und der Prismen mit

$$z_{SH} = z_L {}^* z_P$$

beziehungsweise symbolisch SH = $SH_L$ * $SH_P$
multipliziert werden;
E: Anwendung der Zufallsphase, wobei jedem modulierten Subhologramm eine zufallsverteilte Phase $\Phi_z$ zugeordnet wird und mit

$$z_{SH} := z_{SH\,*} \exp(i\Phi_z)$$

beziehungsweise SH := SH * exp ($i\Phi_z$) eine komplexe Multiplikation ausgeführt wird;
F: Intensitätsmodulation, wobei mit $z_{SH} := C * z_{SH}$ beziehungsweise SH := C * SH die Werte des modulierten Subhologramms mit einem reellen Intensitätsfaktor C versehen werden.

5. Verfahren nach Anspruch 2 oder 4, wobei die komplexen Hologrammwerte des Subhologramms der modellierten Linse (L) im Modulatorbereich (MR) aufgrund der Symmetrie in einem Quadranten ermittelt werden und unter Beachtung der Vorzeichen die ermittelten komplexen Hologrammwerte auf die anderen Quadranten übertragen werden.

6. Verfahren nach Anspruch 4, wobei unter Beachtung der Lage der Subhologramme (SH) deren Überlagerung zum Gesamthologramm ($H\Sigma_{SLM}$) mit $H\Sigma_{SLM} = \Sigma\ SH_i$ als komplexe Summe der Subhologramme (SH) gebildet wird.

7. Verfahren nach Anspruch 4, wobei jedem modulierten Subhologramm (SH) eines Objektpunkts jeweils eine zufallsverteilte Phase zugeordnet wird und die Zufallsphasen aller Subhologramme insgesamt gleich verteilt sind.

8. Verfahren nach Anspruch 4, wobei die Lage des Modulatorbereichs (MR) so ermittelt wird, dass das Zentrum des Modulatorbereichs (MR) auf der Geraden durch den zu rekonstruierenden Objektpunkt (OP) und das Zentrum des Sichtbarkeitsbereichs (VR) liegt.

9. Verfahren nach einem der Ansprüche 1 bis 8, wobei die komplexen Hologrammwerte in Pixelwerte des Lichtmodulatormittels (SLM) umgewandelt werden.

10. Verfahren nach Anspruch 9, wobei die komplexen Hologrammwerte in Burckhardt-Komponenten oder Zweiphasenkomponenten umgewandelt werden.

11. Verfahren nach einem der Ansprüche 1 bis 10, wobei ein festgelegter Raumbereich in Objektpunkte strukturiert wird und für jeden Objektpunkt das Subhologramm in eine Look-Up-Tabelle abgelegt wird.

12. Verfahren nach einem der Ansprüche 1 bis 10, wobei ein festgelegter Raumbereich in Objektpunkte strukturiert wird und für jeden Objektpunkt das auf wenigstens eine Komponente des Abbildungselements (OS) bezogene Subhologramm ermittelt und in zugehörige Look-Up-Tabellen abgelegt wird.

13. Holographische Wiedergabeeinrichtung zur Darstellung eines Videohologramms einer in eine Vielzahl von Objektpunkten zerlegten Szene (3D-S), umfassend:

ein Bildschirmmittel (B), ein Lichtmodulatormittel (SLM),
einen Sichtbarkeitsbereich (VR) innerhalb eines Periodizitätsintervalls der Rekonstruierten des Videohologramms,
einen durch den Sichtbarkeitsbereich (VR) und einem zu rekonstruierenden Objektpunkt (OP) definierten Modulatorbereich (MR) auf dem Lichtmodulatormittel (SLM),
**dadurch gekennzeichnet, dass** im Modulatorbereich (MR) auf dem Lichtmodulatormittel (SLM) Modulationsfunktionen eines modellierten Abbildungselements mittels des Verfahrens nach einem der Ansprüche 1 bis 12 kodiert werden, mit denen ein Subhologramm (SH) des zu rekonstruierenden Objektpunktes (OP) darstellbar ist und das Gesamthologramm ($H\Sigma_{SLM}$) aus einer Überlagerung von Subhologrammen (SH) gebildet wird.

14. Holographische Wiedergabeeinrichtung nach Anspruch 13, wobei das Bildschirmmittel (B) das Lichtmodulatormittel (SLM) selbst bezeichnet, in dem das Videohologramm der Szene (3D-S) kodiert ist.

15. Holographische Wiedergabeeinrichtung nach Anspruch 13, wobei das Bildschirmmittel (B) ein optisches Element umfasst, auf das ein im Lichtmodulatormittel kodiertes Videohologramm der Szene (3D-S) oder eine im Lichtmodulatormittel kodierte Wellenfront der Szene abgebildet wird.

16. Holographische Wiedergabeeinrichtung nach Anspruch 15, wobei das optische Element eine Linse oder ein Spiegel ist.

**Claims**

1. Analytical method for computing a video hologram of a scene (3D-S), which has been decomposed into a multiplicity of object points, for use for a holographic reproduction device (HAE) having at least one light modulator means (SLM), in which a visibility region (VR) within a periodicity interval of the reconstructed scene of the video hologram is defined, in which subsequently due to the visibility region (VR) together with each object point (OP) of the scene (3D-S) to be reconstructed the position and the size of a sub-hologram (SH) on the light modulator means are determined by way of tracing the visibility region (VR) through the object point to be reconstructed back to the light modulator means (SLM), wherein a modulator region (MR) corresponds to the region of the sub-hologram (SH) on the light modulator means (SLM), wherein for each modulator region (MR) a sub-hologram (SH) of the object point (OP) to be reconstructed is calculated and the total hologram ($H\Sigma_{SLM}$) is formed from a superposition of sub-holograms (SH), **characterized in that** the complex hologram values of a sub-hologram (SH) are ascertained from the wavefront of the object point (OP) that is respectively to be reconstructed in a modulator region (MR) of the light modulator means by way of computing the modulation functions of an imaging element (OS) which is modelled in the modulator region (MR) and in whose focal point the object point (OP) to be reconstructed is located, with which modulation functions the sub-hologram (SH) of said object point is presentable.

2. Method according to Claim 1, wherein the imaging element (OS) comprises at least one lens (L).

3. Method according to Claim 1 or 2, wherein the imaging element (OS) additionally comprises at least one prism (P).

4. Method according to Claim 1, which comprises for each object point (OP) of the scene the following steps:

   A: ascertaining the size and position of the sub-hologram (SH) as modulator region (MR), which is dimensioned with "a" as half width and "b" as half height and is provided with local coordinates;
   B: ascertaining the sub-hologram of a modelled lens (L) in the modulator region (MR), comprising:

   B1: determining the focal length f of the lens (L) as normal distance of the object point (OP) to be reconstructed from the modulator region (MR) ;
   B2: ascertaining the complex values of the associated sub-hologram ($SH_L$) of the lens (L) from

   $$z_L = \exp\{+/-i*[(\pi/\lambda f)*(x^2+y^2)]\},$$

   with $\lambda$ as reference wavelength, f as focal length and the associated coordinate pair (x, y), and having a sign for a concave/convex lens;

   C: ascertaining the sub-holograms of modelled prisms (P) in the modulator region (MR), comprising:

   C1: determining the linear factor $C_x$ of a prism (PH) with horizontal effective direction, which is described in the interval $x \in$ [-a, a] by $C_x = M*(2\pi/\lambda)$, with M as inclination of the prism;
   C2: determining the linear factor $C_y$ of a prism (PV) with vertical effective direction, which is analogously described in the interval $y \in$ [-b, b] by

   $$C_y = N*(2\pi/\lambda),$$

   with N as inclination of the prism;
   C3: ascertaining the complex values of the associated sub-hologram ($SH_P$) of the combined prisms from the superposition of the two prism terms

   $$z_P = \exp\{i*[C_x*(x-a)+C_y*(y-b)]\};$$

   D: superposition of the sub-hologram ($SH_L$) of the lens (L) and of the sub-hologram ($SH_P$) of the prisms (P), wherein the complex values of the lens and the prisms are multiplied by
   $z_{SH}=z_L*z_P$ or, symbolically, $SH=SH_L*SH_P$;
   E: applying the random phase, wherein each modulated sub-hologram is assigned a randomly distributed phase $\Phi_z$ and with
   $Z_{SH}:=z_{SH}*\exp(i\Phi_z)$ or $SH:=SH_L*\exp(i\Phi_z)$ a complex multiplication is performed;
   F: intensity modulation, wherein
   with $z_{SH}:=C*z_{SH}$ or $SH:=C*SH$ the values of the modulated sub-hologram are provided with a real intensity factor C.

5. Method according to Claim 2 or 4, wherein the complex hologram values of the sub-hologram of the modelled lens (L) in the modulator region (MR) are ascertained on the basis of the symmetry in a quadrant and the ascertained complex hologram values are transferred, taking note of the signs, to the other quadrants.

6. Method according to Claim 4, wherein, taking note of the position of the sub-holograms (SH), the superposition thereof to the total hologram ($H\Sigma_{SLM}$) is formed with $H\Sigma_{SLM}=\Sigma SH_i$ as a complex sum of the sub-holograms (SH).

7. Method according to Claim 4, wherein each modulated sub-hologram (SH) of an object point is assigned in each case a randomly distributed phase and the random phases of all sub-holograms are overall distributed equally.

8. Method according to Claim 4, wherein the position of the modulator region (MR) is ascertained such that the centre of the modulator region (MR) is situated on the straight line through the object point (OP) to be reconstructed and the centre of the visibility region (VR) .

9. Method according to one of Claims 1 to 8, wherein the complex hologram values are converted to pixel values of the light modulator means (SLM).

10. Method according to Claim 9, wherein the complex hologram values are converted to Burckhardt components or two-phase components.

11. Method according to one of Claims 1 to 10, wherein a defined spatial region is structured into object points and, for each object point, the sub-hologram is stored in a look-up table.

12. Method according to one of Claims 1 to 10, wherein a defined spatial region is structured into object points and, for each object point, the sub-hologram which relates to at least one component of the imaging element (OS) is ascertained and stored in associated look up tables.

13. Holographic reproduction device for presenting a video hologram of a scene (3D-S) which has been decomposed into a multiplicity of object points, comprising:

a screen means (B), a light modulator means (SLM),
a visibility region (VR) within a periodicity interval of the reconstructed scene of the video hologram,
a modulator region (MR), defined by the visibility region (VR) and an object point (OP) to be reconstructed, on the light modulator means (SLM),
**characterized in that**, in the modulator region (MR) on the light modulator means (SLM), modulation functions of a modelled imaging element are coded using the method according to one of Claims 1 to 12, with which a sub-hologram (SH) of the object point (OP) to be reconstructed is presentable and the total hologram ($H\Sigma_{SLM}$) is formed from a superposition of sub-holograms (SH) .

14. Holographic reproduction device according to Claim 13, wherein the screen means (B) designates the light modulator means (SLM) itself, in which the video hologram of the scene (3D-S) is coded.

15. Holographic reproduction device according to Claim 13, wherein the screen means (B) comprises an optical element on which a video hologram of the scene (3D-S), which is coded in the light modulator means, or a wavefront of the scene, which is coded in the light modulator means, is imaged.

16. Holographic reproduction device according to Claim 15, wherein the optical element is a lens or a mirror.

**Revendications**

1. Procédé analytique pour le calcul d'un hologramme vidéo d'une scène (3D-S) décomposée en une pluralité de points d'objet pour l'utilisation pour un dispositif de restitution holographique (HAE) avec au moins un moyen de modulation de lumière (SLM),
dans lequel une zone de visibilité (VR) à l'intérieur d'un intervalle de périodicité de la reconstitution de l'hologramme vidéo est définie, dans lequel on détermine ensuite, grâce à la zone de visibilité (VR), ensemble avec chaque point d'objet (OP) à reconstituer de la scène (3D-S), la position et la taille d'un sous-hologramme (SH) sur le moyen de modulation de lumière en ce que la zone de visibilité (VR) est soumise à traçabilité par le point d'objet à reconstituer sur le moyen de modulation de lumière (SLM), dans lequel une zone de modulation (MR) correspond à la zone du sous-hologramme (SH) sur le moyen de modulation de lumière (SLM),
dans lequel, pour chaque zone de modulation (MR), un sous-hologramme (SH) du point d'objet (OP) à reconstituer est calculé et l'hologramme complet ($H\Sigma_{SLM}$) est formé à partir d'une superposition de sous-hologrammes (SH),
**caractérisé en ce que** les valeurs d'hologramme complexes d'un sous-hologramme (SH) sont déterminées à partir du front d'onde du point d'objet (OP) à reconstituer respectif dans une zone de modulation (MR) du moyen de modulation de lumière **en ce que** les fonctions de modulation d'un élément de reproduction (OS) modélisé dans la zone de modulation (MR), dans le point focal duquel se situe le point d'objet (OP) à reconstituer, sont calculées, avec lesquelles le sous-hologramme (SH) de ce point d'objet peut être représenté.

**2.** Procédé selon la revendication 1, dans lequel l'élément de reproduction (OS) comprend au moins une lentille (L).

**3.** Procédé selon la revendication 1 ou 2, dans lequel l'élément de reproduction (OS) comprend additionnellement au moins un prisme (P).

**4.** Procédé selon la revendication 1, lequel comprend les étapes suivantes pour chaque point d'objet (OP) de la scène :

A : détermination de la taille et de la position du sous-hologramme (SH) en tant que zone de modulation (MR), laquelle est dimensionnée avec « a » en tant que moitié de largeur et « b » en tant que moitié de hauteur et est dotée de coordonnées locales ;
B : détermination du sous-hologramme d'une lentille (L) modélisée dans la zone de modulation (MR) comprenant :

B1 : détermination de la distance focale f de la lentille (L) en tant que distance normale du point d'objet (OP) à reconstituer par rapport à la zone de modulation (MR) ;
B2 : détermination des valeurs complexes du sous-hologramme associé ($SH_L$) de la lentille (L) à partir de $Z_L = \exp \{+/i^* [(\pi/\lambda f) ^* (x^2+y^2)]\}$,
avec $\lambda$ en tant que longueur d'onde de référence, f en tant que distance focale et la paire de coordonnées (x, y) associées, ainsi qu'avec un signe pour une lentille concave/convexe ;

C : détermination des sous-hologrammes de prismes (P) modélisés dans la zone de modulation (MR) comprenant :

C1 : détermination du facteur linéaire $C_x$ d'un prisme (PH) avec une direction d'action horizontale, lequel est décrit dans l'intervalle $x \in$ [-a, a] par $C_x = M^*(2\pi/\lambda)$, avec M en tant que pente du prisme ;
C2 : détermination du facteur linéaire $C_y$ d'un prisme (PV) avec une direction d'action verticale, lequel est décrit de manière analogue dans l'intervalle $y \in$ [-b, b] par $C_y = N^* (2\pi/\lambda)$ avec N en tant que pente du prisme ;
C3 : détermination des valeurs complexes du sous-hologramme associé ($SH_P$) des prismes combinés à partir de la superposition des deux termes de prisme $z_P = \exp \{i^*[C_x^*(x-a)+C_y^*(y-b)]\}$ ;

D : superposition du sous-hologramme ($SH_L$) de la lentille (L) et du sous-hologramme ($SH_P$) des prismes (P), les valeurs complexes de la lentille et des prismes étant multipliées par $z_{SH} = z_L^*z_P$ ou symboliquement SH = $SH_L^*SH_P$ ;
E : utilisation de la phase aléatoire, au cours de laquelle on associe à chaque sous-hologramme modulé une phase à répartition aléatoire $\Phi_z$ et effectue une multiplication complexe avec $z_{SH} := z_{SH}^*\exp (1\Phi_z)$ ou SH := SH*exp ($i\Phi_z$) ;
F : modulation d'intensité, au cours de laquelle, avec $z_{SH} := C^*z_{SH}$ ou SH := C*SH, les valeurs du sous-hologramme modulé sont dotées d'un facteur d'intensité C réel.

**5.** Procédé selon la revendication 2 ou 4, dans lequel les valeurs d'hologramme complexes du sous-hologramme de la lentille modélisée (L) dans la zone de modulation (MR) sont déterminées en raison de la symétrie dans un quadrant et, en tenant compte des signes, les valeurs d'hologramme complexes déterminées sont transférées sur les autres quadrants.

**6.** Procédé selon la revendication 4, dans lequel, en tenant compte de la position des sous-hologrammes (SH), la superposition de ceux-ci pour donner l'hologramme complet ($H\Sigma_{SLM}$) est réalisée avec $H\Sigma_{SLM} = \Sigma SH_i$ en tant que somme complexe des sous-hologrammes (SH).

**7.** Procédé selon la revendication 4, dans lequel on associe à chaque sous-hologramme (SH) modulé d'un point d'objet respectivement une phase à répartition aléatoire et les phases aléatoires de tous les sous-hologrammes sont globalement réparties de façon égale.

**8.** Procédé selon la revendication 4, dans lequel la position de la zone de modulation (MR) est déterminée de telle sorte que le centre de la zone de modulation (MR) se situe sur la droite à travers le point d'objet (OP) à reconstituer et le centre de la zone de visibilité (VR).

**9.** Procédé selon l'une des revendications 1 à 8, dans lequel les valeurs d'hologramme complexes sont converties en valeurs de pixel du moyen de modulation de lumière (SLM).

**10.** Procédé selon la revendication 9, dans lequel les valeurs d'hologramme complexes sont converties en composantes de Burckhardt ou composantes à deux phases.

**11.** Procédé selon l'une des revendications 1 à 10, dans lequel une zone spatiale déterminée est structurée en points d'objet et pour chaque point d'objet, le sous-hologramme est déposé dans une table de consultation.

**12.** Procédé selon l'une des revendications 1 à 10, dans lequel une zone spatiale déterminée est structurée en points d'objet et pour chaque point d'objet, on détermine le sous-hologramme relatif à au moins une composante de l'élément de reproduction (OS) et le dépose dans des tables de consultation associées.

**13.** Dispositif de restitution holographique pour la représentation d'un hologramme vidéo d'une scène (3D-S) décomposée en une pluralité de points d'objet, comprenant :

un moyen d'écran (B), un moyen de modulation de lumière (SLM),
une zone de visibilité (VR) à l'intérieur d'un intervalle de périodicité de la reconstitution de l'hologramme vidéo,
une zone de modulation (MR) définie par la zone de visibilité (VR) et un point d'objet (OP) à reconstituer sur le moyen de modulation de lumière (SLM),
**caractérisé en ce que**, dans la zone de modulation (MR), sur le moyen de modulation de lumière (SLM), des fonctions de modulation d'un élément de reproduction modélisé sont codées au moyen du procédé selon l'une des revendications 1 à 12,
avec lesquelles un sous-hologramme (SH) du point d'objet (OP) à reconstituer peut être représenté et l'hologramme complet ($H\Sigma_{SLM}$) est formé à partir d'une superposition de sous-hologrammes (SH).

**14.** Dispositif de restitution holographique selon la revendication 13, dans lequel le moyen d'écran (B) désigne lui-même le moyen de modulation de lumière (SLM) dans lequel l'hologramme vidéo de la scène (3D-S) est codé.

**15.** Dispositif de restitution holographique selon la revendication 13, dans lequel le moyen d'écran (B) comprend un élément optique sur lequel est reproduit un hologramme vidéo codé dans le moyen de modulation de lumière de la scène (3D-S) ou un front d'onde codé dans le moyen de modulation de lumière de la scène.

**16.** Dispositif de restitution holographique selon la revendication 15, dans lequel l'élément optique est une lentille ou un miroir.

Fig. 1

Fig. 2a

# Fig. 2b

# Fig. 2c

3D-Szene mit Tiefen- & Farbinformationen, durch eine Vielzahl von Objektpunkten (OP) strukturiert

Betrachterposition

Nachführsystem

für jeden sichtbaren Objektpunkt (OP)

(A) Ermittlung der Lage & Größe des Subhologramms (MR)→ Fig. 1

(B) Subhologramm (SH$_L$) der kodierten Linse (L)

(B1) Brennweite f der Linse (L)

(B2) Subhologramm (SH$_L$)

(C) Subhologramm SH$_P$ der Prismen PH, PV

(C1) Linearfaktor C$_x$ für Prisma PH

(C2) Linearfaktor C$_y$ für Prisma PV

(C3) Subhologramm SH$_P$

(D) Modulation der Sublhologramme SH$_H$, SH$_P$

(E) Zufallsphase

(F) Helligkeitsmodulation

OP$_n$ := OP$_{n+1}$+1

Subhologramm SH

(G) Gesamthologramm

(H) Umwandlung in Pixelwerte

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004044659 A2
- WO 2006027228 A1
- WO 2006119760 A2
- DE 102006004300
- WO 2006066919 A1
- US 5400155 A
- DE 102006042324

**In der Beschreibung aufgeführte Nicht-Patentliteratur**

- **LUCENTE M.** interactive computation of holograms using a look-up table. *Journal of Electronic Imaging,* 1993, vol. 2 (1), 28-34